**Europäisches Patentamt**

**European Patent Office**

**Office européen des brevets**

(11) Veröffentlichungsnummer: **0 373 419**
**A2**

## EUROPÄISCHE PATENTANMELDUNG

(21) Anmeldenummer: **89121994.1**

(22) Anmeldetag: **29.11.89**

(51) Int. Cl.⁵: **H02J 7/10**

(30) Priorität: **12.12.88 DE 3841820**

(43) Veröffentlichungstag der Anmeldung:
**20.06.90 Patentblatt 90/25**

(84) Benannte Vertragsstaaten:
**AT BE CH DE ES FR GB IT LI NL SE**

(71) Anmelder: **Siemens Aktiengesellschaft**
**Wittelsbacherplatz 2**
**D-8000 München 2(DE)**

(72) Erfinder: **Van der Linden, Klaus, Dipl.-Ing.**
**Innerer Ring 40**
**D-8640 Kronach(DE)**
Erfinder: **Wunder, Siegfried, Dipl.-Ing. (FH)**
**Neundorf 13**
**D-8621 Mitwitz(DE)**

(54) **Batterieladegerät für ein medizinisches Gerät.**

(57) Derartige medizinische Geräte werden häufig mit elektrischer Energie aus wiederaufladbaren Batterien versorgt, die über einen an Netzspannung anschließbaren Transformator (Tr) und einen an dessen Niederspannungsseite angeschlossenen Gleichrichter (3) wiederaufgeladen werden. Erfindungsgemäß ist an den Ladestromkreis für die Batterie eine Zeitsteuerung (9) angeschlossen, die den Ladestrom nach einem anfänglich höheren Wert nach einer vorgegebenen Zeit (1,5 h) auf eine für Dauerladung unbedenklichen Wert zurückschaltet. Zweckmäßig ist eine Prüftaste (10) vorgesehen, durch deren Betätigung der Ladevorgang unterbrochen und die Batterie mit maximalem Strombedarf kurzzeitig belastet wird und daß anschließend der Wert der Batteriespannung unter Last gemessen und mit einer vorgegebenen Referenzspannung (11) verglichen wird, wobei eine Kontrollampe (LED) lediglich dann leuchtet, wenn die Batteriespannung größer ist als die Referenzspannung. Erfindungsgemäß gestaltete Batterieladegeräte eignen sich hervorragend zur Versorgung von Batterien in kleineren tragbaren medizinischen Geräten, beispielsweise Asthma-Inhalationsgeräten.

EP 0 373 419 A2

## Batterieladegerät für ein medizinisches Gerät

Die Erfindung betrifft ein Batterieladegerät für ein medizinisches Gerät, vorzugsweise ein Inhalationsgerät, mit einem an die Netzspannung anschließbaren Transformator und mit einer niederspannungsseitig an den Transformator angeschlossenen Gleichrichterschaltung.

Ein derartiges Batterieladegerät ist beispielsweise auch zur Wiederaufladung von Batterien in Tascheninhalationsgeräten gemäß der EP-A1-0 258 637 vorgesehen. Aus Sicherheitsgründen muß eine bis dahin vorschriftsmäßig eingesetzte jedoch leere Batterie bereits nach drei Minuten wieder so weit aufgeladen sein, daß für mindestens einen Inhalationsvorgang für eine sichere Gerätefunktion die erforderliche Energie zur Verfügung steht. Andererseits muß jedoch eine Dauerladung über 12 Stunden hinaus (bis zu zwei Jahren) möglich sein, ohne daß eine Schädigung der Batterie eintritt. Außerdem muß dem Anwender der jeweilige Ladezustand der Batterie erkennbar sein.

Der Erfindung liegt daher die Aufgabe zugrunde, ein Batterieladegerät zu schaffen, das einerseits eine ihm zugeordnete Batterie in kurzer Zeit so weit auflädt, daß die gespeicherte Energie für einen normalen Betriebszyklus des zu versorgenden Geräts ausreicht und daß andererseits bei einer Daueraufladung über 12 Stunden hinaus keine Schäden an der Batterie verursacht werden. Dabei soll jederzeit der Ladezustand der Batterie erkennbar sein.

Diese Aufgabe wird erfindungsgemäß dadurch gelöst, daß an den Ladestromkreis für die Batterie eine Zeitsteuerung angeschlossen ist, die den Ladestrom nach einem anfänglich höheren Wert nach einer vorgegebenen Zeit auf einen für Dauerladung unbedenklichen Wert zurückschaltet und eine Prüftaste vorgesehen ist, durch deren Betätigung der Ladevorgang unterbrochen und die Batterie mit maximalem Strombedarf zwei Sekunden lang belastet wird, wobei anschließend der Wert der Batteriespannung unter Last gemessen und mit einer vorgegebenen Referenzspannung verglichen wird und wobei eine Kontrollampe lediglich dann leuchtet, wenn die Referenzspannung überschritten wird.

Vorteilhafte Ausgestaltungen der Erfindung sind in den Ansprüchen 3 bis 7 angegeben.

Die Erfindung ist sehr vorteilhaft, weil sie auf sehr einfache und betriebssichere Art und Weise gewährleistet, daß eine in einem medizinischen Gerät vorgesehene Batterie in sehr kurzer Zeit (in drei Minuten) für mindestens einen Betriebszyklus betriebsbereit ist und weil andererseits gefahrlos eine Dauerladung auch über einen 12 Stunden überschreitenden Zeitraum möglich ist. Außerdem ist durch obengenannte Weiterbildung schnell, sicher und eindeutig erkennbar, ob die Batterie ausreichend aufgeladen ist oder nicht.

Ein Ausführungsbeispiel der Erfindung wird anhand eines Schaltplans in einer Zeichnung näher erläutert.

Oberspannungsseitige Klemmen 1 eines Transformators Tr mit einer Nennleistung von etwa 1 bis 2 VA liegen an der üblichen Netzspannung von 220 V. Eine sekundärseitige Wicklung 2 des Transformators Tr führt eine Spannung von etwa 12 V und speist einen Gleichrichter 3. Die vom Gleichrichter 3 abgegebene Gleichspannung ist über Verbindungsleitungen 5 und 8 Klemmen 4 zugeführt, an denen eine nicht dargestellte Batterie hängt. Elektrisch parallel zum Gleichrichter 3 ist ein Kondensator $C_2$ vorgesehen.

In der Verbindungsleitung 5 liegt ein Spannungsregler 6, dessen Meßleitung 7 galvanisch direkt mit der Verbindungsleitung 8 verbunden ist. In der Verbindungsleitung 5 sind zwischen dem Spannungsregler 6 und der positives Potential führenden Klemme 4 parallel zueinander ohmsche Widerstände $R_{V1}$ und $R_{V2}$ angeordnet, von denen jedoch über einen Kontakt $K_1$ jeweils nur einer im Strompfad liegt. Der Kontakt $K_1$ wird von einem Zeitmeßgerät 9 gesteuert, das jeweils drei Minuten nach einem Anlegen der nicht dargestellten Batterie den Kontakt $K_1$ vom Widerstand $R_{V1}$ auf den Widerstand $R_{V2}$ umschaltet. Die elektrisch parallel liegenden Widerstände $R_{V1}$ und $R_{V2}$ sind im übrigen während der Ladezeit ständig über einen Kontakt $K_2$ mit der positives Potential führenden Klemme 4 verbunden.

Eine Prüftaste 10 ist mechanisch mit dem Kontakt $K_2$ und einem weiteren, in der Verbindungsleitung 8 liegenden Kontakt $K_3$ gekoppelt. Durch Betätigung der Prüftaste 10 werden die Kontakte $K_2$ und $K_3$ umgeschaltet, so daß die an den Klemmen 4 liegende Batterie einen Lastwiderstand $R_L$ beaufschlagt. Die Größe des Lastwiderstandes $R_L$ entspricht dem Gesamtwiderstand eines von der Batterie zu versorgenden Gerätes.

Die bei gedrückter Prüftaste 10 am Lastwiderstand $R_L$ anstehende Spannung wird in einem Vergleichsmeßgerät 11 mit einer Referenzspannung verglichen. Liegt die am Lastwiderstand $R_L$ anstehende Spannung über dieser Referenzspannung, beispielsweise über 9,7 V, so leuchtet eine Anzeige LED auf. Das Aufleuchten der Anzeige LED zeigt an, daß der Ladezustand der an den Klemmen 4 liegenden Batterie ausreichend ist, um ein zugehöriges Gerät mit elektrischer Energie zu versorgen. Derartige Geräte sind vorzugsweise medizinische Geräte wie beispielsweise Inhalationsgeräte.

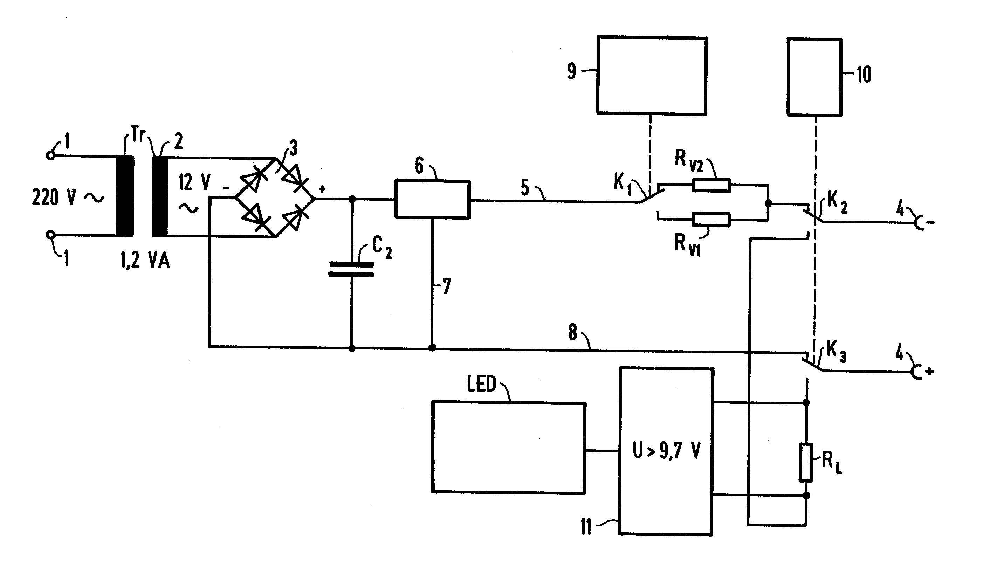

## Ansprüche

1. Batterieladegerät für ein medizinisches Gerät, vorzugsweise ein Inhalationsgerät, mit einem an die Netzspannung anschließbaren Transformator (Tr) und mit einem niederspannungsseitig an den Transformator (Tr) angeschlossenen Gleichrichter (3), dadurch gekennzeichnet, daß an den Ladestromkreis für die Batterie eine Zeitsteuerung (9) angeschlossen ist, die den Ladestrom nach einem anfänglich höheren Wert nach einer vorgegebenen Zeit auf einen für Dauerladung unbedenklichen Wert zurückschaltet und eine Prüftaste (10) vorgesehen ist, durch deren Betätigung der Ladevorgang unterbrochen und die Batterie mit maximalem Strombedarf kurzzeitig, beispielsweise zwei Sekunden lang, belastet wird und daß anschließend der Wert der Batteriespannung unter Last gemessen und mit einer vorgegebenen Referenzspannung (11) verglichen wird, wobei eine Kontrollampe (LED) lediglich dann leuchtet, wenn die Referenzspannung überschritten ist.

2. Batterieladegerät nach Anspruch 1,
dadurch gekennzeichnet, daß der anfänglich höhere Ladestrom derart bemessen ist, daß nach drei Minuten Ladezeit die Energie gespeichert ist, die für die Inbetriebsetzung und Inbetriebhaltung des Gerätes während eines üblichen Betriebszyklus erforderlich ist.

3. Batterieladegerät nach einem der Ansprüche 1 und 2,
dadurch gekennzeichnet, daß die Umschaltung auf den unbedenklichen niederen Ladestrom nach etwa 1,5 Ladestunden erfolgt.

4. Batterieladegerät nach einem der Ansprüche 1 bis 3,
dadurch gekennzeichnet, daß der anfänglich höhere Ladestrom zusammen mit dem anschließend unbedenklichen niedrigeren Ladestrom nach insgesamt etwa 12 Stunden zu einer Volladung der Batterie führt.

5. Batterieladegerät nach einem der Ansprüche 1 bis 4,
dadurch gekennzeichnet, daß die Volladung der Batterie bei deren Verwendung in einem Ultraschall-Zerstäubungsgerät für Flüssigkeiten zu Inhalationszwecken für 25 Inhalationshübe ausreicht.

6. Batterieladegerät nach einem der Ansprüche 1 bis 5,
dadurch gekennzeichnet, daß die Zeitsteuerung (9) eine Umschaltung eines in Serie zur Batterie geschalteten Widerstandes ($R_{V1}$) auf einen anderen Wert (Widerstand $R_{V2}$) bewirkt.

7. Batterieladegerät nach einem der Ansprüche 1 bis 6,
dadurch gekennzeichnet, daß ein Spannungsregler (6) im Ladestromkreis liegt.